# EUROPÄISCHE PATENTSCHRIFT

(11) **EP 1 932 737 B1**
(45) Veröffentlichungstag und Bekanntmachung des Hinweises auf die Patenterteilung: **03.08.2011**
(21) Anmeldenummer: 07122474.5
(22) Anmeldetag: 06.12.2007
(51) Int. Cl.: B60T 13/04, B60T 13/22, F16D 65/20, F16D 65/14

(54) **Parkfunktion für eine selbstverstärkende Bremse**
Parking function for a self-reinforcing brake
Fonction de stationnement pour un frein à auto-amplification

(30) Priorität: 12.12.2006 DE 102006059615
(43) Veröffentlichungstag der Anmeldung: 18.06.2008
(73) Patentinhaber: SIEMENS AKTIENGESELLSCHAFT, 80333 München (DE)
(72) Erfinder: Stammen, Christian, 52074, Aachen (DE); Liermann, Matthias, 52066, Aachen (DE); Schiffers, Toni, 41812, Erkelenz (DE)

(56) Entgegenhaltungen:
- DE-A1- 3 441 128
- US-A- 5 036 960

## Beschreibung

Die Erfindung betrifft eine Vorrichtung zum Bremsen einer bewegten Masse mit einem beweglich geführten Kopplungsglied zum Andrücken eines Bremsbelages an eine Bremsfläche und einem mit Hydraulikflüssigkeit befüllbaren und mit dem Kopplungsglied verbundenen hydraulischen Bremsaktor zum Erzeugen einer Andruckkraft, die über das Kopplungsglied in den Bremsbelag einleitbar ist, wobei der Bremsbelag über Verbindungsmittel an einem Druckgeber abgestützt ist, der einen mit Hydraulikflüssigkeit befüllten Abstützzylinder und einen mit diesem zusammenwirkenden Abstützkolben aufweist, wobei der Abstützzylinder über eine Hochdruckhydraulikleitung mit dem Bremsaktor kommuniziert.

Eine solche Vorrichtung ist aus der DE 34 41 128 A1 bereits bekannt. Die dort offenbarte Vorrichtung weist einen Bremsaktor auf, der einen mit Hydraulikflüssigkeit befüllten Bremszylinder umfasst, wobei ein in den Zylinder hineinragendes Bewegteil mit einem Bremsauslöser zum Andrücken eines Bremsbelages an eine Bremsscheibe vorgesehen ist. Der Bremsaktor ist Teil eines Bremssattels, der auf einem Teilkreis beweglich geführt ist. Tangential zum Teilkreis ist eine Zylinderbohrung als Abstützzylinder vorgesehen, wobei in dem Abstützzylinder ein Abstützkolben hineinragt, der an einem Fahrgestell einer zu bremsenden Masse abgestützt ist. Wird der Hydraulikdruck in dem Bremszylinder erhöht, werden die Bremsbeläge an eine sich in Fahrtrichtung drehende Bremsscheibe gedrückt. Es kommt zum Reibschluss und somit zu einer Bewegung des Bremssattels tangential zur Drehrichtung der Bremsscheibe, wobei der an dem Fahrgestell abgestützte und in den Abstützzylinder hineinragende Abstützkolben tiefer in Abstützzylinder hinein bewegt wird. Der Abstützzylinder ist mit einer Hydraulikflüssigkeit befüllt, deren Druck erhöht wird. Der Abstützzylinder ist ferner über eine Hydraulikleitung mit dem Bremszylinder verbunden, so dass es zu einer fest vorgegebenen Kraftverstärkung kommt. Auf diese Weise ist eine selbstverstärkende Bremse bereitgestellt.

Weitere selbstverstärkende Bremssysteme sind in der GB 1,019,982, der DE 43 04 905 A1 und in der DE 15 30 869 beschrieben.

Der gattungsgemäßen Vorrichtung haftet der Nachteil an, dass diese bei Stillstand der bewegten Masse eine oftmals den Anforderungen nicht genügende Bremskraft bereitstellt, bzw. eine vorhandene Bremskraft auf Grund von Leckage nicht über unbegrenzte Zeit halten kann.

Aufgabe der Erfindung ist es daher, eine Vorrichtung der eingangs genannten Art bereitzustellen, die auch bei längerem Stillstand der Masse eine ausreichende Bremskraft bereitstellt und halten kann.

Die Erfindung löst diese Aufgabe durch hydraulische Parkbremsmittel, die zum Erzeugen einer Andruckkraft bei Stillstand der Masse eingerichtet sind.

Erfindungsgemäß ist eine selbstverstärkende Bremse bereitgestellt, die hydraulische Parkbremsmittel aufweist. Zwar sind Reibungsbremsen mit Park- oder Haltefunktion aus dem Stand der Technik bereits bekannt. Die Park- oder Haltefunktion wird jedoch gemäß dem Stand der Technik durch mechanische Kraftspeicher, wie Federn oder dergleichen zusammen mit einer zweckmäßigen Hebelmechanik bereitgestellt. Mechanische Parkbremsmittel lassen sich jedoch nur umständlich und mit einem erhöhten Raumbedarf in eine selbstverstärkende hydraulische Bremse integrieren mit einem erhöhten Gewicht und einer erschwerten Steuerbarkeit im Gefolge. Die hydraulisch realisierten erfindungsgemäßen Parkbremsmittel lassen sich hingegen einfach in eine selbstverstärkende hydraulische Bremse integrieren.

Gemäß einer bevorzugten Ausgestaltung der Erfindung weisen die Parkbremsmittel einen Parkbremshydraulikkreis mit einem Parkkremsspeicher auf, wobei der Parkbremshydraulikkreis über ein Rückschlagventil mit der Hochdruckhydraulikleitung und über ein Parkventil mit dem Bremsaktor verbunden ist. Gemäß dieser Ausgestaltung der Erfindung ist ein Parkbremshydraulikkreis bereitgestellt, der von den übrigen Hydraulikkreisen weitestgehend abgetrennt ist. Auf diese Weise wird die Gefahr einer Leckage an Ventilen und den wesentlichen internen Dichtstellen, wie beispielsweise einer Kolbendichtung, herabgesetzt. Erfindungsgemäß ist die hydraulische Erzeugung einer definierten Bremskraft auch während einer längeren Stillstandsphase ermöglicht, wodurch auch hohe Sicherheitsanforderungen erfüllt werden. Dies wird durch den Parkbremsspeicher ermöglicht, der über den separaten Parkbremshydraulikkreis von den restlichen Hydraulikleitungen der Vorrichtung abgeschirmt ist. Aufgrund dieses Schaltungskonzeptes ist die Zahl der möglichen Leckagestellen reduziert.

Vorteilhafterweise verfügt der Parkbremshydraulikkreis über ein Druckminderventil zum Einstellen eines bestimmten Hydraulikdruckes in dem Parkbremsspeicher, wobei ein Parkspeicherventil in Parallelschaltung zum Druckminderventil vorgesehen ist. Das Füllen des Parkbremsspeichers erfolgt gemäß den genannten Ausgestaltungen der Erfindung über die Hochdruckhydraulikleitung und aufgrund des Rückschlagventils immer dann, wenn der Druck in der Hochdruckhydraulikleitung größer ist als der Druck im Parkbremsspeicher. Aufgrund des Druckminderventils wird der Parkbremsspeicher jedoch nur bis zu einem vorgegebenen Hydraulikdruck geladen. Ist der vorgegebene Druck erreicht, trennt das Druckminderventil den Parkbremsspeicher von dem restlichen Hydrauliksystem der Vorrichtung. Ist der Parkbremsspeicher gefüllt, nehmen die Parkbremsmittel keinen Volumenstrom an Hydraulikflüssigkeit mehr auf. Der Volumenstrombedarf der Parkbremsmittel ist auf diese Weise begrenzt. Die hydraulische Bremse weist dann eine gewünschte Steifigkeit auf. Das Parkspeicherventil in Parallelschaltung zum Druckminderventil dient hingegen zum Verbinden des Parkbremsspeichers mit dem Bremsaktor beziehungsweise mit dem Parkventil, wenn sich dieses in der geschlossenen Stellung befindet.

Gemäß einer bevorzugten Ausgestaltung ist der Bremsaktor ein Differenzialkolbenzylinder mit zwei Hydraulikkammern, die über unterschiedlich große Wirkflächen verfügen, wobei das Parkventil zum Druckausgleich zwischen den Hydraulikkammern eingerichtet ist. Ein solcher Differenzialkolbenzylinder weist beispielsweise einen Bremszylinder auf, in dem sich eine Kolbenstange erstreckt, die an ihrem freien Ende innerhalb des Bremszylinders einen Bremskolben trägt, der den Bremszylinder in zwei gegeneinander abgedichtete Hydraulikkammern unterteilt. Auf der Stangenseite weist der Bremskolben eine kleinere Wirkfläche auf als auf der von der Kolbenstange abgewandten Seite des Bremskolbens. Auf der Stangenseite wirkt der Hydraulikdruck daher lediglich auf die die Kolbenstange umgebende Ringfläche ein, während an der von der Kolbenstange abgewandten Seite die gesamte Fläche des Bremskolbens als Wirkfläche dient. Bei gleichen Hydraulikdrücken wird somit eine Kraftkomponente in Richtung der Stangenseite erzeugt. Mit anderen Worten entsteht das Bestreben den Bremskolben zur Stangenseite auszufahren. Diese Kraft wird bei Stillstand der Masse als Andruckkraft in die Bremsbeläge eingeleitet. Es kommt zum Reibschluss und somit zum Feststellen der Masse. Gemäß dieser Ausgestaltung der Erfindung herrscht innerhalb des Differenzialkolbenzylinders in beiden Kammern der gleiche Druck. Interne Leckagen im Bremsaktor, am Parkventil sind daher vermieden und eine mögliche interne Leckage an einer Regeleinrichtung zwischen Parkventil und Bremsaktor hat keinen Einfluss mehr auf die Erhaltung des Drucks in den Kammern des Bremsaktors.

Vorteilhafterweise weisen die Parkbremsmittel eine Parkbremssteuerung zum Ansteuern des Parkventils auf. Durch die Parkbremssteuerung kann die Parkbremsfunktion auf einfache Art und Weise von Außen bereitgestellt werden.

Vorteilhafterweise weisen die Parkbremsmittel eine Parkbremssteuerung zum Ansteuern des Parkventils und des Parkspeicherventils auf. Gemäß dieser vorteilhaften Weiterentwicklung ist eine Parkbremssteuerung auch für ein abweichendes Ausführungsbeispiel der Erfindung bereitgestellt.

Zweckmäßigerweise sind Regelungsmittel zum Regeln der Bremskraft im Bremsaktor vorgesehen. Die Regelungsmittel betreffen die Regelung der Bremskraft im Bremskaktor während des Normalbetriebs. Die Parkbremsmittel treten zu den Regelungsmitteln in Stillstandsphasen hinzu. Die Regelungsmittel umfassen dann zweckmäßigerweise die Parkbremssteuerung. Allerdings ist es im Rahmen der Erfindung auch möglich, die Regelungsmittel unabhängig von der Parkbremssteuerung bereitzustellen.

Zweckmäßigerweise umfassen die Regelungsmittel Druckerfassungsmittel zum Erfassen eines Druckistwertes oder eines Druckdifferenzwertes als Istwert, einen Vergleicher, der einen vorgegebenen Sollwert mit dem Istwert unter Gewinnung eines Differenzwertes ΔF vergleicht, eine Regelungseinheit und ein Bremsventil zum Einstellen des Druckes der Hydraulikflüssigkeit in dem Bremsaktor, wobei die Regelungseinheit so auf das Bremsventil wirkt, dass der Differenzwert ΔF minimiert wird. Die Druckerfassungsmittel sind beispielsweise als Druck-Spannungsumsetzer oder als Druck-Stromumsetzer realisiert, wobei beispielsweise ein geeichter Druckspannungsumsetzer einen dem erfassten Druck entsprechenden Spannungswert erzeugt, der dann als zu regelnder Istwert bei der Regelung eingesetzt wird. Beim Einsatz von Zweikammersystemen, die auf unterschiedlichen Seiten eines Kolbens unterschiedliche große Drücke aufweisen, dienen zwei Druckspannungs- oder Druck-stromumsetzer zum Bilden des Druckdifferenzwertes ΔP, wobei jedes Druckerfassungsmittel zum Erfassen des Druckes in einer Kammer eingerichtet ist. Der Differenzwert der Druckerfassungsmittel oder mit anderen Worten der Istwert wird anschließend einem Vergleicher zugeführt, der den Istwert mit einem vorgegebenen Sollwert vergleicht. Möglich ist auch eine Istwerterfassung über einen Differenzdruckspannungs- oder Differenzdruckstromumsetzer. Der Sollwert wird beispielsweise von einem Fahrzeugführer, einer Sicherheitseinrichtung oder von einer übergeordneten Steuerung vorgegeben. Der Vergleicher erzeugt einen Differenzwert aus dem Istwert und dem Sollwert, wobei eine dem Vergleicher nachgeschaltete Regelungseinheit zum Minimieren des Differenzwertes eingerichtet ist. Dabei umfasst die Regelungseinheit einen zweckmäßigen Regler, der auf das Bremsventil einwirkt. Das Bremsventil ist zum Einstellen des Druckes der Hydraulikflüssigkeit vorzugsweise in dem Bremsaktor eingerichtet. Der Druck der Hydraulikflüssigkeit in den Kammern des Bremsaktors bestimmt die Andruckkraft, die über das Kopplungsglied in dem Bremsbelag eingeleitet wird. Dabei ist die eingeleitete Andruckkraft, mit welcher der Bremsbelag gegen die Bremsscheibe oder Bremsfläche gedrückt wird, im Wesentlichen rechtwinklig zur besagten Bremsfläche ausgerichtet.

Vorteilhafterweise sind die Regelungsmittel zum Regeln der Verzögerungskraft eingerichtet. Die Verzögerungskraft im Reibradius ist dabei gleich der Reibkraft, die beim Reibschluss zwischen der Bremsfläche, wie beispielsweise einer rotierenden Bremsscheibe, und dem Bremsbelag wirkt, und stellt daher einen Parameter dar, mit dem die auftretende negative Beschleunigung der Masse genau vorhersagbar ist. So erlaubt insbesondere bei Fahrzeugen die Regelung der Verzögerungskraft ein äußerst genaues Einstellen der Verzögerung des Fahrzeuges. Die Verzögerungskraft kann im Rahmen der Erfindung durch beliebige Sensoren, wie beispielsweise Beschleunigungsmesser oder Kraftmesser, Dehnungsmessstreifen oder der gleichen, als Istwert erfasst werden.

Gemäß einer bevorzugten Ausgestaltung der Erfindung wird die Verzögerungskraft jedoch durch die Regelung des Abstützdruckes der Hydraulikflüssigkeit im Abstützzylinder geregelt, wobei die Regelungsmittel hierfür eingerichtet sind. Aufgrund der Verbindung zwischen Bremsbelag und Druckgeber kann der Druck der Hydraulikflüssigkeit in dem Abstützzylinder als Maß für die Verzögerungskraft verwendet werden. Die Erfassung des Abstützdruckes und somit der Verzögerungskraft erfolgt hierbei beispielsweise durch geeichte Drucksensoren, die ein dem Druck im Abstützzylinder proportionales elektrisches Signal, beispielsweise eine elektrische Spannung, erzeugen. Diese Spannung dient dann bei der weiteren Regelung als Istwert und somit als Maß für den Abstützdruck.

Gemäß einer zweckmäßigen Ausgestaltung der Erfindung ist der Abstützzylinder des Druckgebers durch den Abstützkolben in eine Abstützkammer und in eine Ausgleichskammer unterteilt, wobei die Regelungsmittel zum Regeln des Druckunterschiedes zwischen dem Hydraulikdruck in der Abstützkammer und dem Hydraulikdruck in der Ausgleichskammer eingerichtet sind. Gemäß dieser zweckmäßigen Weiterentwicklung ist eine Selbstverstärkung der Bremsung und deren gleichzeitige Regelung in beiden Fahrtrichtungen möglich. Dieser Vorteil ist insbesondere bei Fahrzeugen als bremsende Masse, die in der Regel in beide Richtungen fahren, von Bedeutung.

Vorteilhafterweise sind die Abstützkammer und die Ausgleichskammer über Rückschlagventile mit der Hochdruckhydraulikleitung beziehungsweise einer Niederdruckhydraulikleitung verbunden.

Vorteilhafterweise ist das Bremsventil über die Hochdruckhydraulikleitung mit der Abstützkammer und über eine Niederdruckhydraulikleitung mit der Ausgleichskammer verbunden.

Zweckmäßigerweise sind in der Abstützkammer und in der Ausgleichskammer Druckfedern vorgesehen, wobei ein Abstützzylinderrückstellventil zum Druckausgleich zwischen der Abstützkammer und der Ausgleichskammer vorgesehen ist und wobei eine Steuerungseinheit den Druckausgleich durch das Abstützzylinderrückstellventil und die Druckfedern einleitet. Gemäß dieser vorteilhaften Weiterentwicklung ist das Überführen des Druckgebers in seine Normalstellung auch dann möglich, wenn der Abstützzylinder ein zwei Kammern aufweisender Zylinder ist. Dabei sorgt das Abstützzylinderrückstellventil für einen Druckausgleich zwischen der Abstützkammer und der Ausgleichskammer, wobei die in den jeweiligen Kammern angeordneten Druckfedern für eine entsprechende Verschiebung des Abstützkolbens innerhalb des Abstützzylinders sorgen. Befindet sich der Abstützkolben wieder in seiner Ausgangsstellung, die vorteilhafterweise die Mittelstellung ist, kann ein erneuter Bremsvorgang ohne die Gefahr eingeleitet werden, dass der Abstützkolben an einer Begrenzungswand des Abstützzylinders anschlägt und ein folgenschwerer Bremsfehler auftritt.

Das Bremsventil kann ein einziges analoges Bremsventil sein oder aber mehrere analoge Bremsventile umfassen. Abweichend davon umfasst das Bremsventil eine Vielzahl von digitalen Bremseinheiten, wobei jede Bremseinheit zwei Schaltstellungen aufweist. Bevorzugt ist das Bremsventil ein analoges Schieberventil mit elektrischer Betätigung, wobei die Regelungseinheit ein Analogregler oder ein Digitalregler mit analogem oder pulsmoduliertem Ausgang ist. Darüber hinaus besteht die Möglichkeit einer überlagerten hydraulisch-mechanischen Betätigung. Das Schieberventil weist beispielsweise zwei hydraulische Ausgänge und zwei hydraulische Eingänge auf. Die Ausgänge können mit den beiden Kammern eines Zylinders verbunden werden. Eingangsseitig ist das Schieberventil beispielsweise mit einer Hochdruckhydraulikleitung und einer Niederdruckhydraulikleitung verbunden. Der Druckunterschied im Zylinder wird durch die Historie der mechanischen Stellung eines mechanisch verschiebbaren Schieberteils bestimmt. Dabei können beliebige Druckdifferenzen erzeugt werden, die innerhalb der eingangsseitigen Druckdifferenz liegen.

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei die
- Figur: ein Ausführungsbeispiel der erfindungsgemäßen Vorrichtung zeigt.

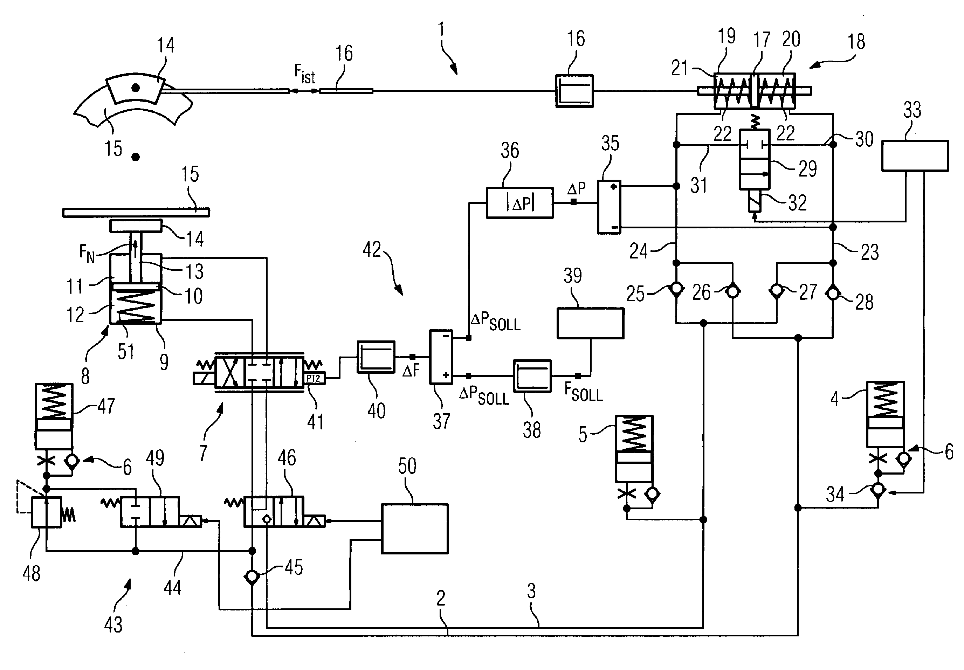

Die Figur zeigt ein Ausführungsbeispiel der erfindungsgemäßen Vorrichtung 1 in einer schematischen Darstellung. Die erfindungsgemäße Vorrichtung 1 umfasst einen Hochdruckkreis 2 sowie einen Niederdruckkreis 3, die jeweils mit einem Hochdruckbehälter 4 beziehungsweise mit einem Niederdruckbehälter 5 verbunden sind. Der Hochdruckbehälter 4 und der Niederdruckbehälter 5 sind jeweils mit einer Kombination aus Drossel und Rückschlagventil 6 ausgerüstet, über die diese mit der jeweiligen Hydraulikleitung 2,3 verbunden sind. Ist der Druck in der jeweils zugeordneten Hydraulikleitung 2,3 geringer als in dem Hochdruckbehälter 4 beziehungsweise dem Niederdruckbehälter 5, tritt Hydraulikflüssigkeit aus dem jeweiligen Druckbehälter 4,5 aus und wird dem System zur Verfügung gestellt. Auf diese Weise wird einem Mangel an Hydraulikflüssigkeit entgegengewirkt. Der Hochdruckkreis 2 und der Niederdruckkreis 3 sind über ein analoges Schieberregelventil 7 als Bremsventil mit einem Bremsaktor 8 verbunden, der einen Bremszylinder 9 aufweist. Der Bremszylinder 9 ist durch einen Bremskolben 10 in eine Bremskammer 12 sowie eine Bremsrückholkammer 11 unterteilt. Vom Druckkolben 10 erstreckt sich eine Kopplungsstange 13 als Kopplungsglied zu einem Bremsbelag 14, der zum Andrücken an eine Bremsscheibe 15 vorgesehen ist. In der Figur 1 sind die Bremsscheibe 15 und der Bremsbelag 14 sowohl in einer Draufsicht als auch in einer Seitenansicht gezeigt.

In der in Figur 1 oben gezeigten Darstellung ist erkennbar, dass der Bremsbelag 14 über Abstützmittel 16, wie beispielsweise eine einfache Stange oder eine beliebige andere Hebelmechanik mit dem Abstützkolben 17 eines Druckgebers 18 verbunden ist. Der Druckgeber 18 weist neben dem Abstützkolben 17 einen Abstützzylinder 19 auf. Der Abstützkolben 17 teilt den Abstützzylinder 19 in eine Abstützkammer 20 sowie in eine Ausgleichskammer 21. In der Abstützkammer 20 und in der Ausgleichskammer 21 sind jeweils Druckfedern 22 angeordnet.

Der Bremsbelag 14 ist tangential zur Drehrichtung der Drehscheibe 15 beweglich gelagert und daher an dem an einem Fahrgestell eines Schienenfahrzeugs befestigten Druckgeber abgestützt.

Die Abstützkammer 20 und die Ausgleichskammer 21 sind jeweils über zweckmäßige Hydraulikleitungen 23 beziehungsweise 24 mit dem Hochdruckkreis 2 beziehungsweise dem Niederdruckkreis 3 verbunden. Dabei sind die Hydraulikleitungen 23, 24 mit Rückschlagventilen 25 bis 28 verbunden. Die in der Hydraulikleitung 24 der Ausgleichskammer 21 angeordneten Rückschlagventile 25, 26 sind gegensinnig zueinander ausgerichtet. Herrscht in der Ausgleichskammer 21 ein höherer Druck als im Niederdruckkreis 3, verschließt das Rückschlagventil 25 die Verbindung zwischen der Hydraulikleitung 24 und dem Niederdruckkreis 3. Ist hingegen der Druck in der Ausgleichskammer 21 größer als der in dem Hochdruckkreis 2, öffnet das Rückschlagventil 26, so dass Fluid wie beispielsweise eine geeignete Hydraulikflüssigkeit aus der Ausgleichskammer 21 verdrängt und in den Hochdruckbehälter 4 überführt wird. Ist der Druck in der Ausgleichskammer 21 hingegen niedriger als im Niederdruckkreis 3, öffnet das Ventil 25, so dass ein Zufluss von Hydraulikflüssigkeit aus dem Niederdruckbehälter 5 in die Ausgleichskammer 21 ermöglicht ist. Entsprechendes gilt für das Zusammenwirken der Abstützkammer 20 und den Rückschlagventilen 27, 28 über die Hydraulikleitung 23.

In Figur 1 ist ferner ein Abstützzylinderrückstellventil 29 erkennbar, das über Hydraulikleitungen 30 und 31 mit der Abstützkammer 20 beziehungsweise der Ausgleichskammer 21 kommuniziert. Das Abstützzylinderrückstellventil 29 verfügt über ein Schiebeglied 32, das bei Bestätigung den Druckausgleich zwischen der Abstützkammer 20 und der Ausgleichskammer 21 herbeiführt. Liegt ein Druckausgleich vor, verschieben die Druckfedern 22 den Abstützkolben 17 wieder in die in Figur 1 gezeigte Mittelstellung. Auf diese Weise wird vermieden, dass der Abstützkolben 17 gegen eine Begrenzung des Abstützzylinders 19 verschoben und somit die Bremsverstärkung unterbrochen wird. Zum Betätigen des Abstützzylinderrückstellventils 29 dient eine zweckmäßige Druckausgleichsteuereinheit 33. Die Betätigung erfolgt beispielsweise über elektromagnetische Kräfte.

Die Druckausgleichsteuereinheit 33 wirkt ferner auf ein Ventil 34 ein, das ein bewusstes Abkoppeln des Speichers 4 aus dem Hochdruckkreis 2 beispielsweise zur Reduktion des Abstützkolbenwegs oder zu Wartungszwecken ermöglicht. Das Ventil 34 ist im Normalbetrieb geöffnet.

Die Hydraulikleitungen 23 und 24 sind jeweils mit geeichten figürlich nicht dargestellten Druck-Spannungsumsetzern versehen. Jeder Druck-Spannungsumsetzer stellt eine dem Druck in der Abstützkammer 20 beziehungsweise in der Ausgleichskammer 21 proportionale Spannung an seinem Ausgang bereit. Der Ausgang jedes Druck-Spannungsumsetzers liegt an dem Eingang eines Differenzbildners 35 an. Der Differenzbildner 35 ist ausgangsseitig mit einem Betragsbildner 36 verbunden, der aus der vom Differenzbildner 35 bereitgestellten Druckdifferenz Δp den Betrag |Δp| berechnet. Der Betrag der Druckdifferenz |Δp| wird schließlich an den Eingang eines Vergleichers 37 gelegt. Am zweiten Eingang des Vergleichers 37 liegt eine Solldruckdifferenz Δpₛₒₗₗ als Sollwert an, die ausgehend von einer Sollkraft Fₛₒₗₗ und in Abhängigkeit eines vorgegebenen Flächen- und/oder Getriebefaktors 38 berechnet wird. Die Sollkraft Fₛₒₗₗ wird mittels einer zweckmäßigen Steuerungseinheit 39 durch einen Benutzer der Vorrichtung eingegeben. Der Vergleicher 37 erzeugt an seinem Ausgang einen Differenzwert ΔF, der an dem Eingang einer Regeleinheit 40 anliegt, die anschließend ein Verschiebelement 41 des Bremsventils 7 so verschiebt, dass der Differenzwert ΔF minimiert wird. Das Bremsventil 7 ist beispielsweise ein Proportionalventil.

Zum Andrücken des Bremsbelages 14 an die Bremsscheibe 15 dient eine Vorspannfeder 51. Die Vorspannfeder 51 drückt den Bremsbelag gegen die Bremsscheibe, falls sich hydraulisch keine Andruckkraft erzeugen lässt.

Die Wirkungsweise der erfindungsgemäßen Vorrichtung 1 ist wie folgt: Zum Einleiten eines Bremsvorganges wird eine Sollkraft Fₛₒₗₗ über die Regelungsmittel 42 angefordert. Die Regelungsmittel 42 umfassen die Steuerungseinheit 39, die figürlich nicht dargestellten Messsensoren, den Differenzbildner 35, den Betragsbildner 36, den Flächenfaktorbilder 38, den Vergleicher 37, die Regeleinheit 40 und das Bremsventil 7. Die Druckdifferenz Δp zwischen der Abstützkammer 20 und der Ausgleichskammer 21 ist zu Beginn der Bremsung gleich null, so dass ein großer Differenzwert ΔF durch den Vergleicher 37 erzeugt wird. Die Regeleinheit 40 verschiebt anschließend das Verschiebelement 41 nach links, so dass ein großer Druckunterschied zwischen der Bremskammer 12 und der Bremsrückholkammer 11 erzeugt wird. Dabei ist der Druck in der Bremskammer 12 höher als in der Bremsrückholkammer 11. Es kommt zu einem Verschieben des Bremskolbens 10 und somit zum Einleiten einer Andruckkraft F_{N} in der mit den Pfeilen angedeuteten Richtung auf die Bremsscheibe 5. Durch den Reibschluss zwischen Bremsbelag und Bremsscheibe wird eine tangential zur Drehrichtung der Bremsscheibe gerichtete Reibkraft oder mit anderen Worten eine Verzögerungskraft Fᵢₛₜ erzeugt. Die Verzögerungskraft Fist wird aufgrund der beweglichen Lagerung des Bremsbelages 14 über die Verbindungsmittel 16, also die Hebelmechanik, in den Abstützkolben 17 eingeleitet. Der Abstützkolben 17 wird bei einer Drehung der Bremsscheibe 15 im Uhrzeigersinn aus der in Figur 1 gezeigten Stellung nach rechts verschoben. In der Abstützkammer 20 erhöht sich daher der Druck der Hydraulikflüssigkeit gegenüber dem Druck der Hydraulikflüssigkeit in der Ausgleichskammer 21. Die Drücke werden jeweils durch die Druck-Spannungsumsetzer erfasst und an den Eingang des Differenzbildners 35 gelegt. Dies führt am Ausgang des Differenzbildners 35 zu einer Druckdifferenz Δp und somit zu einem entsprechenden Betrag |Δp| oder Absolutwert am Ausgang des Betragsbildners 36. Der Differenzwert ΔF verkleinert sich, wobei die Regelungseinheit 40 im weiteren Verlauf der Regelung dafür sorgt, dass der Differenzwert ΔF schließlich minimiert wird. Mit anderen Worten ist erfindungsgemäß eine Selbstverstärkung und eine gleichzeitige Regelung der Bremskraft bereitgestellt.

Mit Hilfe der selbstverstärkenden Bremse ist somit das Erzeugen einer Andruckkraft ohne zusätzliche Energieversorgung mit Ausnahme der Ansteuerung der Ventile ermöglicht.

Um auch bei längeren Stillstandsphasen eine ausreichende Bremskraft bereitzustellen, sind hydraulische Parkbremsmittel 43 vorgesehen. Die hydraulischen Parkbremsmittel 43 umfassen einen Parkbremshydraulikkreis 44, der über ein Rückschlagventil 45 gegenüber dem Hochdruckkreis als Hochdruckhydraulikleitung 2 sowie mittels eines Parkventils 46 von dem Bremsaktor 8 abtrennbar ist. In dem Parkbremshydraulikkreis 44 ist ein Parkbremsspeicher, beispielsweise einen Kolbenspeicher, 47 angeordnet, der über den Hochdruckkreis 2 mit Druck beaufschlagbar ist. Zur Druckminderung ist ein Druckminderventil 48 vorgesehen. Ein Rückschlagventil 6, sowie eine Drossel in Parallelschaltung hierzu, dienen zur schnellen Befüllung des Parkbremsspeichers 47 sowie zu dessen verlangsamter Entladung. In Parallelschaltung zum Druckminderventil 48 ist ein Parkspeicherventil 49 vorgesehen. Zum Ansteuern des Parkventils 46 und des Parkspeicherventils 49 dient eine Parkbremssteuerung 50. Beim Parkspeicherventil 49 und Parkventil 46 handelt es sich in dem gezeigten Ausführungsbeispiel um elektrisch ansteuerbare Impulsmagnetventile, die bistabil sind, also bei Stromzufuhr in die Durchlassstellung oder aber in ihre Sperrstellung überführbar sind, wobei sie in den jeweils ausgewählten Stellung so lange verweilen, bis sie durch ein erneutes Steuersignal in den jeweils anderen Zustand überführt werden.

Der Parkbremsspeicher 47 wird von dem Hochdruckkreis 2 mit komprimierter Hydraulikflüssigkeit befüllt, wobei das Rückschlagventil 45 den Bremshydraulikkreis 44 gegenüber dem Hochdruckkreis 2 abschirmt und so gegenüber Leckagen in dem Hochdruckkreis 2 sowie den daran angeschlossenen Systemen schützt. Bei geschlossenem Parkbremsspeicherventil 49 wird somit der Druck im Parkbremsspeicher 47 aufrechterhalten.

Das Füllen des Parkbremsenkolbenspeichers 47 erfolgt selbstständig während des Betriebs der Vorrichtung 1. Während beim Bremsvorgang Druck in der Hochdruckkreis 2 aufgebaut wird, wird über das Druckminderventil 48 der Parkbremsspeicher 047 bis zu einem vorgegebenen Druck mit Hydraulikflüssigkeit befüllt. Wenn in dem Parkbremsspeicher 47 der vorgegebene Druck erreicht wurde, trennt das Druckminderventil 48 den Parkbremsspeicher 47 von dem Hochdruckkreis 2. Ist eine Druckminderung nicht erwünscht, kann statt des Druckminderventils 48 auch ein Rückschlagventil 45 zur Trennung eingesetzt werden.

Zum Anlegen der Bremsbeläge 14 an die Bremsscheibe 15 aufgrund der Parkbremsmittel 43 wird zunächst das Bremsventil 7 aus seiner Mittelstellung bewegt, und beispielsweise in die in der Figur rechts gezeigte Durchlassstellung überführt. Dies erfolgt beispielsweise passiv durch eine geeignete Federzentrierung, durch die Regelungsmittel 42 oder aber durch eine Parkbremssteuerung 50, die mittels einer in der Figur figürlich nicht dargestellten Verbindung mit dem Bremsventil 7 verbunden ist. Anschließend wird das Parkventil 46 in die in der Figur gezeigte Stellung überführt, so dass ein Druckausgleich in den beiden Hydraulikkammern 11, 12 des Bremsaktors herbeigeführt ist. Gleichzeitig wird das Bremsspeicherventil 49 in seine Durchgangsstellung überführt, so dass der Parkbremsspeicher 47 einen ausgleichenden Volumenstrom an Hydraulikflüssigkeit bereitstellen kann, um die Bremsbeläge 14 an die Bremsscheibe 15 anzudrücken.

Ist jedoch in dem Hochdruckkreis 2 ein größerer Hydraulikdruck vorhanden, als im Parkbremshydraulikkreis 44, stellt dieser aufgrund des Rückschlagventils 45 den Volumenstrom an Hydraulikflüssigkeit zur Verfügung. Dies ist insbesondere bei längeren Stillstandszeiten in Hanglage vorteilhaft. Zum Lösen der Parkbremse wird das Parkbremsspeicherventil 49 wieder in seine Trennstellung und das Parkventil 46 in seine Durchlassstellung überführt. Anschließend wird das Bremsventil 7 in die Stellung Bremskraftabbau geschaltet, die durch die sich kreuzenden Pfeile in der Figur verdeutlicht ist. Dies bewirkt ein Lösen der Bremsbeläge 14 von der Bremsscheibe 15.

## Patentansprüche

1. Vorrichtung (1) zum Bremsen einer bewegten Masse mit einem beweglich geführten Kopplungsglied (13) zum Andrücken eines Bremsbelages (14) an eine Bremsfläche (15) und einem mit Hydraulikflüssigkeit befüllbaren und mit dem Kopplungsglied (13) verbundenen hydraulischen Bremsaktor (8) zum Erzeugen einer Andruckkraft, die über das Kopplungsglied (13) in den Bremsbelag (14) einleitbar ist, wobei der Bremsbelag (14) über Verbindungsmittel (16) an einem Druckgeber (18) abgestützt ist, der einen mit Hydraulikflüssigkeit befüllten Abstützzylinder (19) und einen mit diesem zusammenwirkenden Abstützkolben (17) aufweist, wobei der Abstützzylinder (19) über eine Hochdruckhydraulikleitung (2) mit dem Bremsaktor (8) kommuniziert,
**gekennzeichnet durch** hydraulische Parkbremsmittel (43), die zum Erzeugen einer Andruckkraft bei Stillstand der Masse eingerichtet sind.

2. Vorrichtung (1) nach Anspruch 1,
**dadurch gekennzeichnet, dass** die Parkbremsmittel einen Parkbremshydraulikkreis (44) mit einem Parkbremsspeicher (47) aufweisen, wobei der Parkbremshydraulikkreis (44) über ein Rückschlagventil (6) mit der Hockdruckhydraulikleitung (2) und über ein Parkventil (46) mit dem Bremsaktor (8) kommuniziert.

3. Vorrichtung (1) nach Anspruch 2,
**dadurch gekennzeichnet, dass** der Parkbremshydraulikkreis (44) ein Druckminderventil (48) zum Einstellen eines bestimmten Hydraulikdruckes in dem Parkbremsspeicher (47) aufweist, wobei ein Parkspeicherventil (49) in Parallelschaltung zum Druckminderventil (48) vorgesehen ist.

4. Vorrichtung (1) nach Anspruch 2 oder 3,
**dadurch gekennzeichnet, dass** der Bremsaktor (8) einen Differentialkolbenzylinder mit zwei Hydraulikkammern (11,12) aufweist, die über unterschiedlich große Wirkflächen verfügen, wobei das Parkventil (46) zum Druckausgleich in den Hydraulikkammern (11,12) eingerichtet ist.

5. Vorrichtung (1) nach einem der Ansprüche 2 bis 4,
**dadurch gekennzeichnet, dass** die Parkbremsmittel (43) eine Parkbremssteuerung (50) zum Ansteuern des Parkventils (46) aufweisen.

6. Vorrichtung (1) nach Anspruch 4,
**dadurch gekennzeichnet, dass** die Parkbremsmittel (43) eine Parkbremssteuerung (50) zum Ansteuern des Parkventils (46) und des Parkspeicherventils (49) aufweisen.

7. Vorrichtung (1) nach einem der Ansprüche 2 bis 6,
**dadurch gekennzeichnet, dass** Regelungsmittel (42) zum Regeln der Bremskraft im Bremsaktor (8) vorgesehen sind.

8. Vorrichtung (1) nach Anspruch 7,
**dadurch gekennzeichnet, dass** die Regelungsmittel (42) Druckerfassungsmittel zum Erfassen eines Druckistwertes oder eines Druckdifferenzistwertes ΔP als Istwert, einen Vergleicher (37), der einen vorgegebenen Sollwert mit dem Istwert unter Gewinnung eines Differenzwertes ΔF vergleicht, eine Regelungseinheit (40) und ein Bremsventil (7) zum Einstellen des Druckes der Hydraulikflüssigkeit in dem Bremsaktor (8) umfassen, wobei die Regelungseinheit (40) so auf das Bremsventil (7) wirkt, dass der Differenzwert ΔF minimiert wird.

9. Vorrichtung (1) nach Anspruch 7 bis 8,
**dadurch gekennzeichnet, dass** der Abstützzylinder (19) durch den Abstützkolben (17) in eine Abstützkammer (22) und eine Ausgleichskammer (21) unterteilt ist, wobei Regelungsmittel (42) zum Regeln des Druckunterschiedes zwischen dem Hydraulikdruck in der Abstützkammer (22) und dem Hydraulikdruck in der Ausgleichskammer (21) eingerichtet sind.

10. Vorrichtung (1) nach Anspruch 9,
**dadurch gekennzeichnet, dass** das Bremsventil (7) über die Hochdruckhydraulikleitung (2) mit der Abstützkammer (20) und über die Niederdruckhydraulikleitung mit der Ausgleichskammer (21) verbunden ist.

11. Vorrichtung (1) nach Anspruch 9 oder 10,
**dadurch gekennzeichnet, dass** in der Abstützkammer (22) und in der Ausgleichskammer (21) Druckfedern (22) vorgesehen sind, wobei ein Abstützzylinderrückstellventil (29) zum Druckausgleich zwischen der Abstützkammer (22) und der Ausgleichskammer (21) vorgesehen ist, und wobei eine Steuerungseinheit (33) den Druckausgleich durch das Abstützzylinderrückstellventil (29) und die Druckfedern (22) einleitet.

## Claims

1. Device (1) for braking a moving mass, having a movably guided coupling member (13) for pressing a brake pad (14) against a braking surface (15) and having a hydraulic brake actuator (8), which can be filled with hydraulic fluid and is connected to the coupling member (13), for producing a contact force, which can be introduced into the brake pad (14) via the coupling member (13), the brake pad (14) being supported via connecting means (16) on a pressure transmitter (18), which has a supporting cylinder (19) filled with hydraulic fluid and a supporting piston (17) interacting therewith, the supporting cylinder (19) communicating with the brake actuator (8) via a high-pressure hydraulic line (2),
**characterized by**
hydraulic parking brake means (43), which are set up to produce a contact force when the mass is stationary.

2. Device (1) according to Claim 1,
**characterized in that**
the parking brake means have a hydraulic parking brake circuit (44) with a parking brake accumulator (47), the hydraulic parking brake circuit (44) communicating via a nonreturn valve (6) with the high-pressure hydraulic line (2) and via a parking valve (46) with the brake actuator (8).

3. Device (1) according to Claim 2,
**characterized in that**
the hydraulic parking brake circuit (44) has a pressure reducing valve (48) for setting a particular hydraulic pressure in the parking brake accumulator (47), a parking accumulator valve (49) being provided in parallel with the pressure reducing valve (48).

4. Device (1) according to Claim 2 or 3,
**characterized in that**
the brake actuator (8) has a differential piston cylinder with two hydraulic chambers (11, 12), which have effective areas of different size, the parking valve (46) being set up for pressure compensation in the hydraulic chambers (11, 12).

5. Device (1) according to one of Claims 2 to 4, **characterized in that**
the parking brake means (43) have an open-loop parking brake controller (50) for activating the parking valve (46).

6. Device (1) according to Claim 4,
**characterized in that**
the parking brake means (43) have an open-loop parking brake controller (50) for activating the parking valve (46) and the parking accumulator valve (49).

7. Device (1) according to one of Claims 2 to 6,
**characterized in that**
closed-loop control means (42) are provided for closed-loop control of the braking force in the brake actuator (8).

8. Device (1) according to Claim 7,
**characterized in that**
the closed-loop control means (42) comprise pressure detection means for detecting an actual pressure value or an actual pressure difference value ΔP as an actual value, a comparator (37), which compares a predetermined desired value with the actual value to obtain a differential value ΔF, a closed-loop control unit (40) and a brake valve (7) for setting the pressure of the hydraulic fluid in the brake actuator (8), the closed-loop control unit (40) acting on the brake valve (7) in such a way that the differential value ΔF is minimized.

9. Device (1) according to Claim 7 to 8,
**characterized in that**
the supporting cylinder (19) is divided by the supporting piston (17) into a supporting chamber (22) and a compensating chamber (21), closed-loop control means (42) being set up for closed-loop control of the pressure difference between the hydraulic pressure in the supporting chamber (22) and the hydraulic pressure in the compensating chamber (21).

10. Device (1) according to Claim 9,
**characterized in that**
the brake valve (7) is connected via the high-pressure hydraulic line (2) to the supporting chamber (20) and via the low-pressure hydraulic line to the compensating chamber (21).

11. Device (1) according to Claim 9 or 10,
**characterized in that**
compression springs (22) are provided in the supporting chamber (22) and in the compensating chamber (21), a supporting cylinder reset valve (29) being provided for pressure compensation between the supporting chamber (22) and the compensating chamber (21), and an open-loop control unit (33) initiating pressure compensation by the supporting cylinder reset valve (29) and the compression springs (22).

## Revendications

1. Dispositif ( 1 ) de freinage d'une masse en mouvement comprenant un élément ( 13 ) d'accouplement guidé de manière mobile pour appliquer une garniture ( 14 ) de frein à une surface ( 15 ) de freinage et un actionneur ( 8 ) de frein hydraulique pouvant être rempli d'un liquide hydraulique et relié à l'élément (13) d'accouplement pour la production d'une force de pression, qui est appliquée à la garniture ( 14) de frein par l'intermédiaire de l'élément ( 13 ) d'accouplement, la garniture ( 14 ) de frein s'appuyant par l'intermédiaire d'un moyen ( 16 ) de liaison sur un indicateur ( 18) de pression, qui comporte un cylindre ( 19 ) d'appui empli de liquide hydraulique et un piston ( 17 ) d'appui coopérant avec celui-ci, le cylindre ( 19 ) d'appui communiquant avec l'actionneur ( 8 ) de frein par l'intermédiaire d'un conduit ( 2 ) hydraulique sous haute pression,
**caractérisé par**
des moyens ( 43 ) hydrauliques de frein de stationnement, qui sont conçus pour produire une pression d'application lorsque la masse est à l'arrêt.

2. Dispositif ( 1 ) suivant la revendication 1,
**caractérisé en ce que**
les moyens de frein de stationnement comportent un circuit ( 44 ) hydraulique de frein de stationnement ayant un accumulateur ( 47 ) de frein de stationnement, le circuit ( 44 ) hydraulique de frein de stationnement communiquant par un clapet ( 6 ) antiretour avec le conduit ( 2 ) hydraulique sous haute pression et par une vanne ( 46 ) de stationnement avec l'actionneur ( 8 ) de frein.

3. Dispositif ( 1 ) suivant la revendication 2,
**caractérisé en ce que**
le circuit ( 44 ) hydraulique de stationnement comporte une soupape ( 48 ) réductrice pour établir une pression hydraulique déterminée dans l'accumulateur ( 47 ) de frein de stationnement, une soupape ( 49 ) d'accumulateur de stationnement étant montée en parallèle à la soupape (48) réductrice.

4. Dispositif ( 1 ) suivant la revendication 2 ou 3,
**caractérisé en ce que**
l'actionneur (8) de frein comporte un cylindre à piston différentiel ayant deux chambres ( 11, 12 ) hydrauliques, qui disposent de surfaces actives de grandeur différente, la vanne ( 46 ) de stationnement étant conçue pour la compensation de la pression dans les chambres ( 11, 12 ) hydrauliques.

5. Dispositif ( 1 ) suivant l'une des revendications 2 à 4,
**caractérisé en ce que**
les moyens ( 43 ) de freinage de stationnement comprennent une commande ( 50 ) de frein de stationnement pour commander la vanne ( 46 ) de stationnement.

6. Procédé ( 1 ) suivant la revendication 4,
**caractérisé en ce que**
les moyens ( 43 ) de freinage de stationnement comprennent une commande ( 50 ) de frein de stationnement pour commander la vanne ( 46 ) de stationnement et la soupape ( 49 ) d'accumulateur de stationnement.

7. Procédé ( 1 ) suivant l'une des revendications 2 à 6,
**caractérisé en ce que**
il est prévu des moyens ( 42 ) de régulation pour réguler la force de freinage dans l'actionneur ( 8 ) de frein.

8. Procédé ( 1 ) suivant la revendication 7,
**caractérisé en ce que**
les moyens ( 42 ) de régulation comprennent des moyens de détection de la pression pour détecter une valeur réelle de la pression ou une valeur ΔP réelle de différence de pression comme valeur réelle, un comparateur ( 37 ), qui compare une valeur de consigne prescrite à la valeur réelle en obtenant une valeur ΔF de différence, une unité ( 40 ) de régulation et une vanne ( 7 ) de frein pour régler la pression du liquide hydraulique dans l'actionneur ( 8) de frein, l'unité ( 40 ) de régulation agissant sur la vanne ( 7 ) de frein, de manière à minimiser la valeur ΔF de différence.

9. Procédé ( 1 ) suivant la revendication 7 à 8,
**caractérisé en ce que**
le cylindre ( 19 ) d'appui est subdivisé par le piston ( 17 ) d'appui en une chambre ( 22 ) d'appui et en une chambre ( 21 ) de compensation, des moyens ( 42 ) de régulation étant conçus pour réguler la différence de pression entre la pression hydraulique dans la chambre ( 22 ) d'appui et la pression hydraulique dans la chambre ( 21 ) de compensation.

10. Procédé ( 1 ) suivant la revendication 9,
**caractérisé en ce que**
la vanne (7) de frein est reliée par le conduit (2) hydraulique sous haute pression à la chambre ( 20 ) d'appui et par le conduit hydraulique à basse pression à la chambre ( 21 ) de compensation.

11. Procédé ( 1 ) suivant la revendication 9 ou 10,
**caractérisé en ce que**
il est prévu dans la chambre ( 22 ) d'appui et dans la chambre ( 21 ) de compensation, des ressorts ( 22 ) de compression, une soupape ( 29 ) de rappel du cylindre d'appui étant prévue pour la compensation de la pression entre la chambre ( 22 ) d'appui et la chambre ( 21 ) de compensation, et dans lequel une unité ( 33 ) de commande déclenche la compensation de la pression par la soupape ( 29 ) de rappel du cylindre d'appui et les ressorts ( 22 ) de compression.
